# EUROPEAN PATENT APPLICATION

(11) **EP 0 875 141 A2**
(43) Date of publication of application: **04.11.1998**
(21) Application number: 98200526.6
(22) Date of filing: 18.02.1998
(51) Int. Cl.: A01K 63/06

(54) **Lighting unit for illuminating aquariums, terrariums and the like.**

(30) Priority: 19.02.1997 IT PD970032
(71) Applicant: TECNO INDUSTRIA S.R.L., 35010 Loreggia (Padova) (IT)
(72) Inventor: Guoli, Giacomo, 20125 Milano (IT)
(74) Representative: Cantaluppi, Stefano

(57) **Abstract**

A lighting unit for illuminating aquariums, terrariums and the like is described which comprises at least one tubular lamp (11, 12) having an associated lamp-holder (11a, 11b, 12a, 12b) which is provided with electrical connections (13, 14) and which can be mounted in a cover (3) of the aquarium or terrarium, wherein the lamp-holder (11a, 11b, 12a, 12b) and the associated lamp (11, 12) are mounted on a frame (20) which is in its turn hinged to the cover (3) for pivoting away from and towards an operative position in which the lamp (11, 12) faces the aquarium or terrarium in order to illuminate it.

## Description

The present invention relates to a lighting unit for illuminating aquariums, terrariums and the like, comprising at least one tubular lamp having an associated lamp-holder which is provided with electrical connections and which can be mounted in a cover of the aquarium or terrarium.

Aquariums and terrariums are normally illuminated using so-called gas-discharge tubular lamps which are installed in the region of an access opening of the aquarium, through which its interior is also illuminated, by means of pairs of lamp-holder sockets which are mounted in suitable recesses in the aquarium cover and which can receive the respective opposite ends of each lamp.

The recesses for accommodating the additional units for the operation of the lamps as well as further accessories for the aquarium itself are normally formed in the cover.

The current standard for ensuring the safety of electrical equipment in a wet environment (an aquarium being a typical example) requires that means be provided for preventing damage to objects or to persons, for example as a result of the unit or parts thereof accidentally falling into the water, in the course of gaining access to the aquarium or while maintaining the lighting unit.

The current trend is therefore either to use lighting units having impermeable lamp-holders or to secure the lighting unit to the cover in such a manner that the removal of a lamp-holder or a lamp involves the use of suitable tools with the consequent greater awareness on the part of the user that he is preparing to carry out such an operation.

A solution using impermeable lamp-holders is particularly complex, as well as onerous. The securing of the lamps and the associated lamp-holders to the cover of the aquarium, on the other hand, makes it more awkward to gain access to the aquarium for normal maintenance operations because the lamps in the lighting unit are normally secured in the region of the access opening of the aquarium through which the light produced by the unit passes.

The object of the invention is to provide a lighting unit which is designed in terms of structure and operation to overcome the disadvantages described with reference to the mentioned prior art. This object is achieved by the invention by means of a lighting unit which has the characteristics indicated in the introduction and which is characterised in that the lamp-holder and the associated lamp are mounted on a frame which is in its turn hinged to the cover for pivoting away from and towards an operative position in which the lamps face the aquarium or terrarium in order to illuminate it.

Thus, in order to gain access to the aquarium and to carry out maintenance operations, it is not necessary to remove the entire lighting unit from the cover, using appropriate tools, but it is sufficient merely to pivot the frame with the associated lamps and lamp-holders into a position in which they are moved away from the access opening of the cover and therefore to permit free access to the inside of the aquarium in perfect safety.

The characteristics and advantages of the invention will become clearer from the following detailed description of some of its preferred, but not exclusive, embodiments which are illustrated by way of non-limiting example with reference to the appended drawings in which:
Figures 1 and 2 are perspective views of an aquarium equipped with a lighting unit according to the present invention, in the operative position and the non-operative position, respectively;

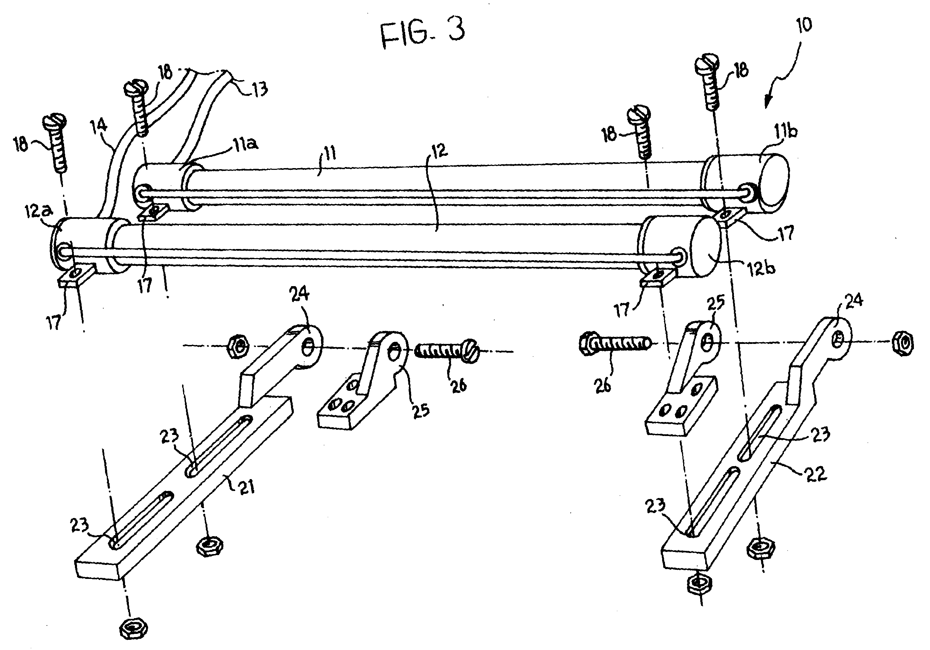

Figure 3 is a perspective exploded view of the lighting unit of the previous Figures; and
Figure 4 is a perspective exploded view of a variant of the lamp-holder of Figure 3 achieving the same benefits.

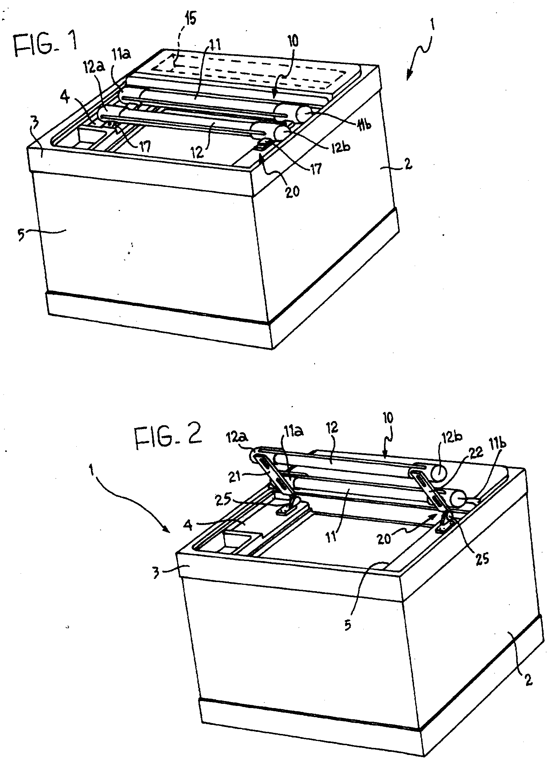

In Figures 1 and 2, an aquarium comprising a tank 2 which is closed at the top by a cover 3 moulded or thermoformed from plastics material is generally indicated 1.

The cover 3 has a recess 4 which is closed by a removable lid (not shown) and at the bottom of which is an opening 5.

Resting over the opening 5 is a lighting unit generally indicated 10 which comprises two tubular gas-discharge lamps 11, 12 (so-called fluorescent lamps), the opposite ends of which are supported by respective cap-form lamp-holders 11a,b, 12a,b provided with respective electrical connections indicated diagrammatically by cables 13, 14.

The lighting unit also comprises, in a manner known per se, electrical or electronic equipment for switching on the lamps 11, 12; this equipment is generally accommodated in an auxiliary recess 15 closed by a removable lid 16 or it may be arranged outside the tank.

Each lamp-holder socket 11a,b, 12a,b carries a perforated tab 17 by which it is secured by means of screws 18 to a frame generally indicated 20. The frame 20 comprises two arms 21, 22 which are provided with slots 23 for receiving the screws 18 and which are equipped with respective hinge elements 24 which, with respective further hinge elements 25 and joining screws 26, enable it to be pivotably connected to the cover 3. The second hinge element 25 is provided with holes so that it can be secured by a screw in the recess 4 of the cover 3. The arms 21, 22 are therefore connected to one another by means of the cover 3 and the lamps 11, 12.

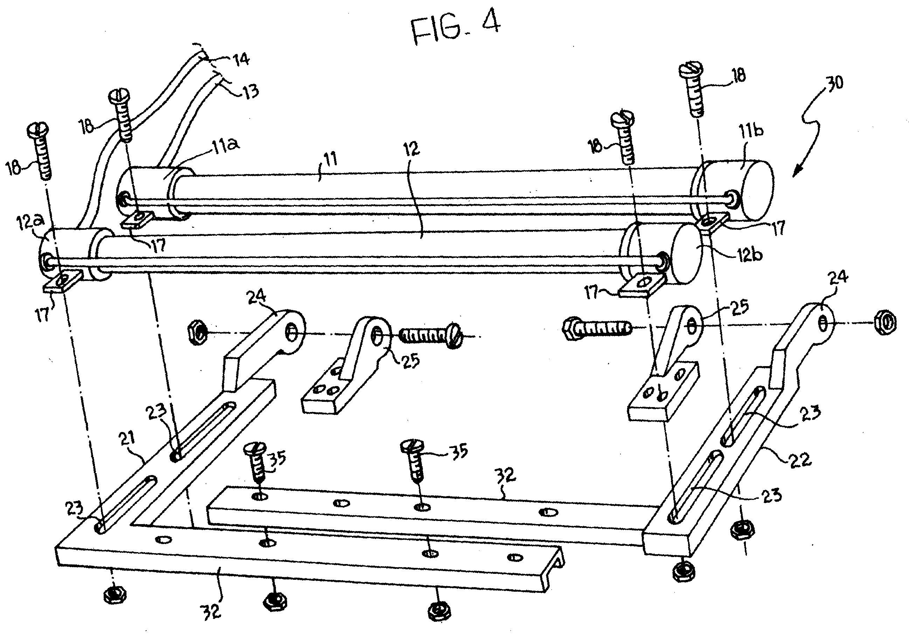

A variant of the invention is generally indicated 30 in Figure 4. This variant, while achieving the same benefits, differs from the previous example merely by the fact that each of the arms 21, 22 has a right-angled shape with a bar-like longitudinal portion 32 having uniformly spaced holes so that the arms can be connected to one another by means of screws 35 to impart greater strength to the frame 20.

The lighting unit is assembled as illustrated in Figures 1 and 2 by securing the lamp-holder sockets to the arms 21, 22 and the latter to the cover by the hinged connection described above.

In the second embodiment of the invention, the arms are also linked to one another by the screws 35.

In the normal operative state, the frame 20 of the lighting unit rests on the bottom of the recess 4, in the region of the access opening of the aquarium. In order to maintain the aquarium, after removing the electrical connection, the frame 20 is pivoted upwards without removing either of the lamps 11, 12 or the associated lamp-holders 11a,b, 12a,b. Therefore, each operation carried out in order to maintain the aquarium can be effected in complete safety.

## Claims

1. A lighting unit for illuminating aquariums, terrariums and the like, comprising at least one tubular lamp (11, 12) having an associated lamp-holder (11a, 11b, 12a, 12b) which is provided with electrical connections (13, 14) and which can be mounted in a cover (3) of the aquarium or terrarium, characterised in that the lamp-holder (11a, 11b, 12a, 12b) and the associated lamp (11, 12) are mounted on a frame (20) which is in its turn hinged to the cover (3) for pivoting away from and towards an operative position in which the lamp (11, 12) faces the aquarium or terrarium in order to illuminate it.

2. A unit according to claim 1, wherein the frame (20) comprises a pair of arms (21, 22) secured by hinges to the cover (3).

3. A unit according to claim 2, wherein the arms (21, 22) are also joined to one another by a rigid connection.

4. A unit according to claim 3, wherein the connection between the arms (21, 22) comprises respective bar-like elements (32) which are secured to each arm (21, 22) and which can be secured to one another in an adjustable position.

5. A lighting unit according to one or more of the preceding claims, characterised in that the lamps (11, 12) are of the gas-discharge type having lamp-holder sockets which can be secured in adjustable positions along the arms (21, 22).

6. A unit according to claim 5, wherein the arms (21, 22) have slots (23) for securing the lamp-holder sockets in an adjustable position.
